# EUROPEAN PATENT APPLICATION

(11) **EP 4 733 815 A1**
(43) Date of publication of application: **29.04.2026**
(21) Application number: 25189125.5
(22) Date of filing: 11.07.2025
(51) Int. Cl.: G02B 3/00, G01B 11/25

(54) **MULTI-CHANNEL DOT, LINE, AND/OR GRID PROJECTOR**

(30) Priority: 22.10.2024 US 202463710173 P; 20.03.2025 US 202519084878
(71) Applicant: II-VI Delaware, Inc., Wilmington, DE 19890 (US)
(72) Inventor: O'DANIEL, Jason, Wilmington, 19890 (US); CHEN, Yi-Yung, Wilmington, 19890 (US); LIU, Hong-Zhi, Wilmington, 19890 (US); CAI, Pei-Song, Wilmington, 19890 (US); SCHIATTONE, Francesco, Wilmington, 19890 (US)
(74) Representative: Schmidt, Christian

(57) **Abstract**

A sensing system may include an illumination projector, an image sensor, and one or more controllers. The illumination projector may project a partial illumination pattern on a target object. The image sensor may sense the partial illumination pattern projected on the target object and may generate signals representative of the sensed illumination pattern. The one or more controllers may control the illumination projector and process the signals generated by the image sensor. The illumination projector may include a microlens array and an emitter array. A spatial relationship of emitters of the emitter array to microlenses of the microlens array may cause the emitter array and the microlens array to project light upon the target object in the partial illumination pattern.

## Description

### CROSS REFERENCE TO RELATED APPLICATIONS

The present application claims benefit to and priority from U.S. Provisional Application Serial Number 63/710,173, filed October 22, 2024, the disclosure of which is hereby incorporated herein by reference in its entirety.

### TECHNICAL FIELD

Aspects of the present disclosure are related to sensing devices and more specifically to an illumination projector for a sensing device.

### BACKGROUND

A sensing system may use a flood illumination projector to illuminate an object (*e.g.,* an eye, a hand, a person, *etc.)* to track, sense, and/or otherwise detect its movement. The sensing range or distance of such sensing systems depends on the optical power of the flood illumination projector. In particular, the illumination range of the flood illumination projector and thus sensing range of the sensing system may be increased by increasing the optical power of the illumination projector. However, because of eye safety concerns, the optical power of the flood illumination projector may not be increased beyond a certain level. Eye safety concerns thus effectively limit the illumination range of a flood illumination projector and the sensing range of such sensing systems.

Further limitations and disadvantages of conventional and traditional approaches will become apparent to one of skill in the art, through comparison of such systems with some aspects of the present disclosure as set forth in the remainder of the present application with reference to the drawings.

### BRIEF SUMMARY OF THE DISCLOSURE

Shown in and/or described in connection with at least one of the figures, and set forth more completely in the claims, are sensing systems such as, for example, 3D sensing systems, eye tracking systems, robotic systems, laser imaging, detection, and ranging (LiDAR) systems, driver monitoring systems (DMS), and/or occupant monitoring systems (OMS) and illumination projectors for use with such sensing systems. In various embodiments, illumination projectors are described which illuminate a target object using a partial illumination pattern. A partial illumination pattern may effectively increase the illumination range of the illumination projector compared to a conventional flood illumination projector operating at similar optical output power. For example, the illumination projector may comprise a dot projector, line projector, or a grid projector which focus its power on several dots, lines, or a grid so as to increase the illumination range. In this manner, the sensing system may increase the illumination range of its illumination projector and its sensing range while maintaining output power levels at or below eye safety requirements.

These and other advantages, aspects, and novel features of the present disclosure, as well as details of illustrated embodiments thereof, will be more fully understood from the following description and drawings.

### BRIEF DESCRIPTION OF THE DRAWINGS

Various features and advantages of the present disclosure may be more readily understood with reference to the following detailed description taken in conjunction with the accompanying drawings, wherein like reference numerals designate like structural elements.
FIG. 1 depicts a sensing system which projects a partial illumination pattern on a target object that is in its field of illumination (FOI).
FIG. 2A depicts a dot illumination pattern that the sensing system of FIG. 1 may project upon a target object.
FIG. 2B depicts a line illumination pattern that the sensing system of FIG. 1 may project upon a target object.
FIG. 2C depicts a grid illumination pattern that the sensing system of FIG. 1 may project upon a target object.
FIG. 3 depicts a flood illumination pattern that a sensing system may project upon a target object.
FIG. 4 depicts a relationship between a single emitter and a microlens array.
FIG. 5 depicts an implementation of an illumination projector for the sensing system of FIG. 1.
FIG. 6 depicts two line illumination patterns offset by 1/3 of the line spacing.
FIGS. 7A-7C depicts portions of three illumination patterns offset by 1/3 of the line spacing.
FIGS. 8A and 8B depicts an illumination pattern and a sinusoidal variance in intensity values of the illumination pattern.
FIGS. 9A-9C depict spatial relationships between emitters and microlenses and their effect on emitter distribution across microlenses.

### DESCRIPTION

The following discussion provides various examples of sensing systems, illumination projectors, and associated illumination patterns. In some embodiments, sensing systems and their illumination projector may project a partial illumination pattern onto a surface of a target object (*e.g.,* an eyeball, a hand, a person, *etc*.). Such partial illumination pattern may provide an increased illumination range at optical output levels that are within eye safety limits. Such examples are non-limiting, and the scope of the appended claims should not be limited to the particular examples disclosed. In the following discussion, the terms "example" and *"e.g."* are non-limiting.

The figures illustrate a general manner of construction. Descriptions and details of well-known features and techniques may be omitted to avoid unnecessarily obscuring the present disclosure. In addition, elements in the drawing figures are not necessarily drawn to scale. For example, the dimensions of some of the elements in the figures may be exaggerated relative to other elements to help improve understanding of the examples discussed in the present disclosure. The same reference numerals in different figures denote the same elements.

The term "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

The terms "comprises," "comprising," "includes," and/or "including," are "open ended" terms and specify the presence of stated features, but do not preclude the presence or addition of one or more other features.

The terms "first," "second," *etc.* may be used herein to describe various elements, and these elements should not be limited by these terms. These terms are only used to distinguish one element from another. Thus, for example, a first element discussed in this disclosure could be termed a second element without departing from the teachings of the present disclosure.

Unless specified otherwise, the term "coupled" may be used to describe two elements directly contacting each other or describe two elements indirectly connected by one or more other elements. For example, if element A is coupled to element B, then element A can be directly contacting element B or indirectly connected to element B by an intervening element C. Similarly, the terms "over" or "on" may be used to describe two elements directly contacting each other or describe two elements indirectly connected by one or more other elements.

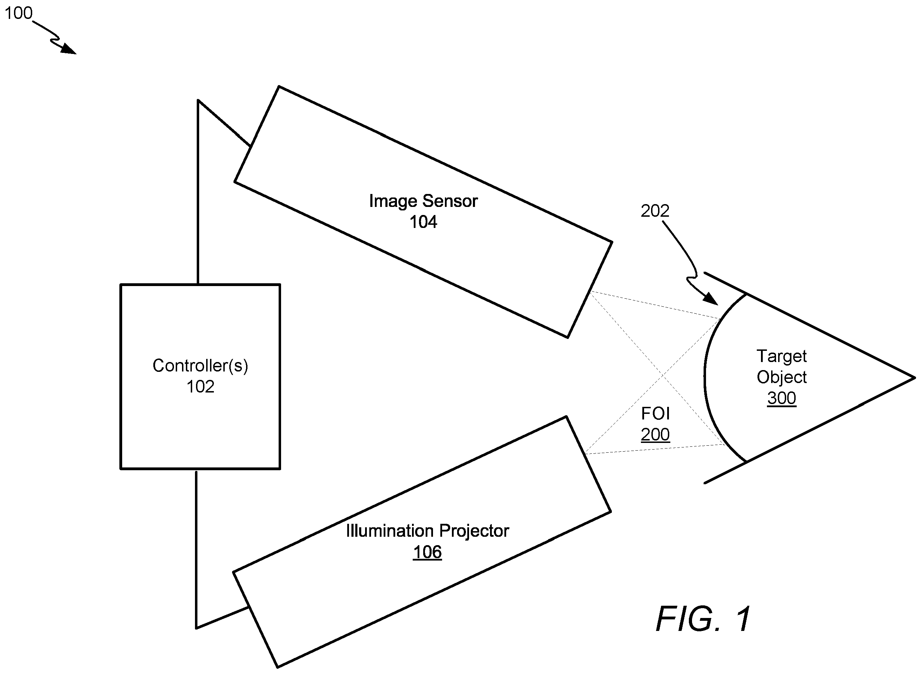

Referring now to FIG. 1, a three-dimensional (3D) sensing system 100 is shown in accordance with various aspects of the present disclosure. The three-dimensional (3D) sensing system 100 may include one or more controllers 102, an image sensor 104, and an illumination projector 106.

The image sensor 104 may capture, detect, and/or otherwise sense the illumination pattern projected by the illumination projector 106 and reflected from a surface of a target object 300. Furthermore, the image sensor 104 may generate one of more signals that are representative of the captured, detected, and/or otherwise sensed illumination pattern. To this end, the image sensor 104 may include a lens system which directs light to one or more light sensing elements (*e.g.,* CMOS imaging sensing elements), which may generate signals represented of the light received.

The one or more controllers 102 may include control circuitry (e.g., processor(s), digital logic, memory device, storage devices, *etc.),* firmware, and/or software that implement algorithms to extract depth information from the image captured by the image sensor 104. While depicted external to the image sensor 104 and the illumination projector 106, the image sensor 104 and/or illumination projector 106 may each include one or more controllers and/or associated control circuitry. Thus, the controller 102 of FIG. 1 is intended to generally represent the control circuitry, firmware, and/or software of the sensing system 100 regardless of whether aspects of such control circuitry are provided by the image sensor 104, the illumination projector 106, and/or external to either the image sensor 104 and the illumination projector 106.

The controller 102 may receive signals from the image sensor 104 that are representative of the illumination pattern sensed by the image sensor and may determine, based on such signals, distance of the target object 300 from the image sensor 104. For structured light sensing, the controller 102 may determine the distance based on a sensed deformation of the illumination pattern. For time-of-flight (TOF) sensing, the controller 102 may determine the distance based on a timing difference between when pulses of light exited the illumination projector 106 and receipt of such pulses by the image sensor 104.

To this end, the illumination projector 106 may project a partial illumination pattern 202 on the target object 300 within a field of illumination (FOI) 200 of the illumination projector 106. In various embodiments, the illumination projector 106 may project the partial illumination pattern 202 onto the target object 300 at power levels and wavelengths that are safe for the human eye. Such illumination patterns 202 may be used by a sensing system 100 to track the target object 300. For example, the sensing system may use the illumination projector 106 to illuminate a human eye so that the sensing system 100 may track and/or otherwise detect a gaze direction of the eye.

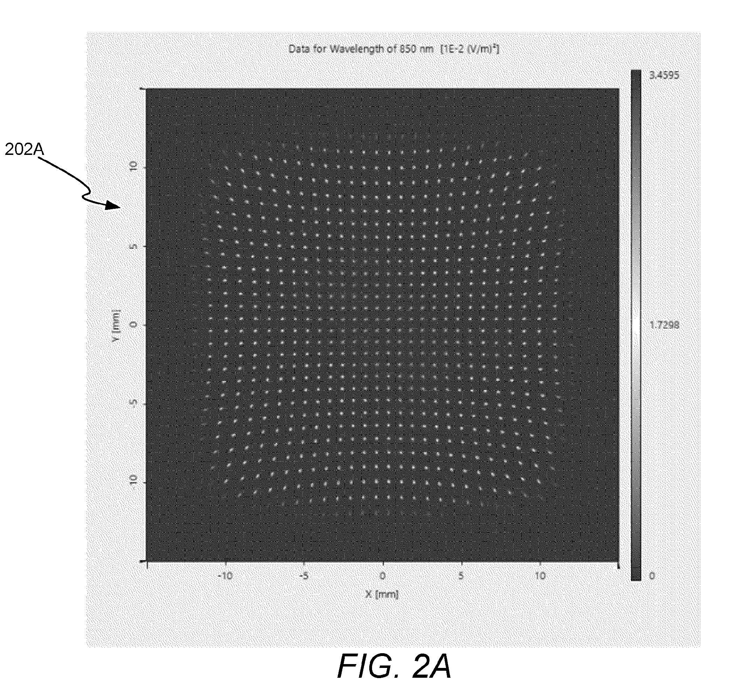

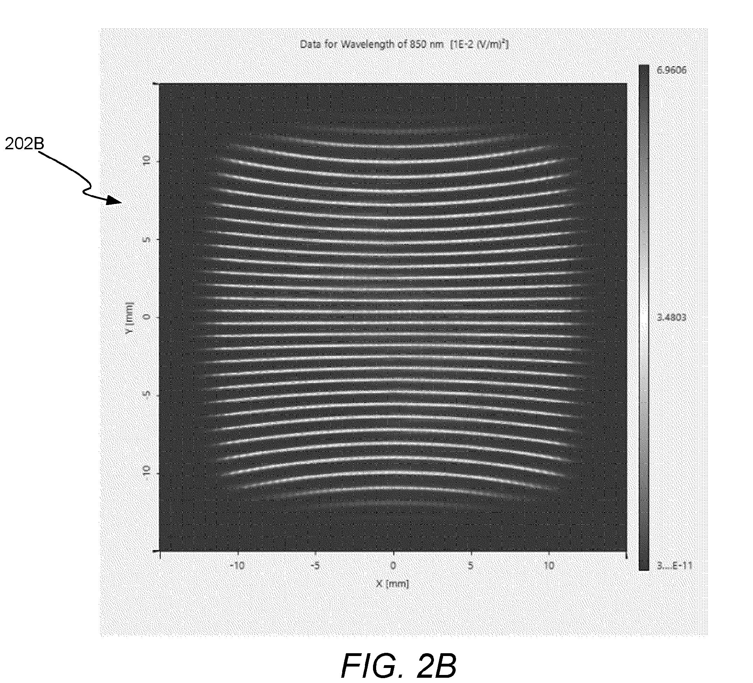

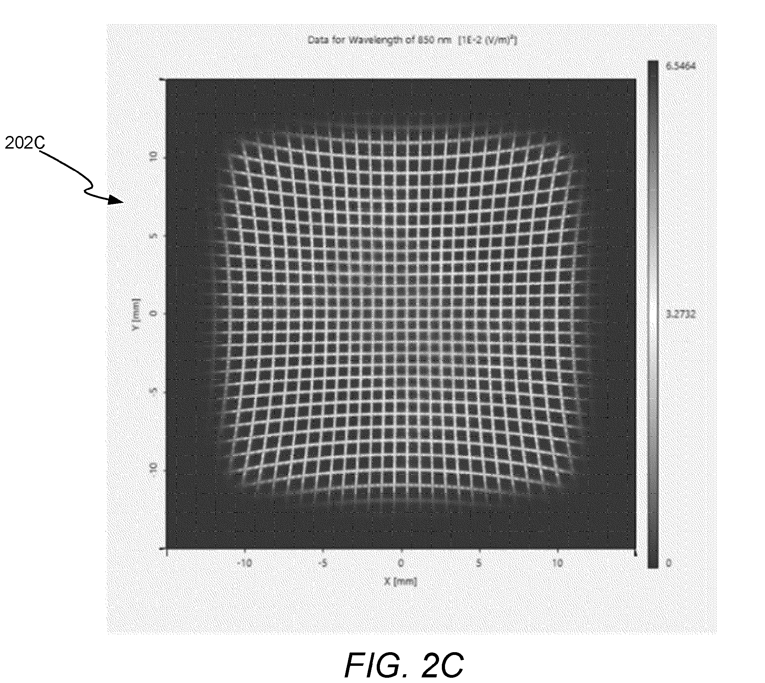

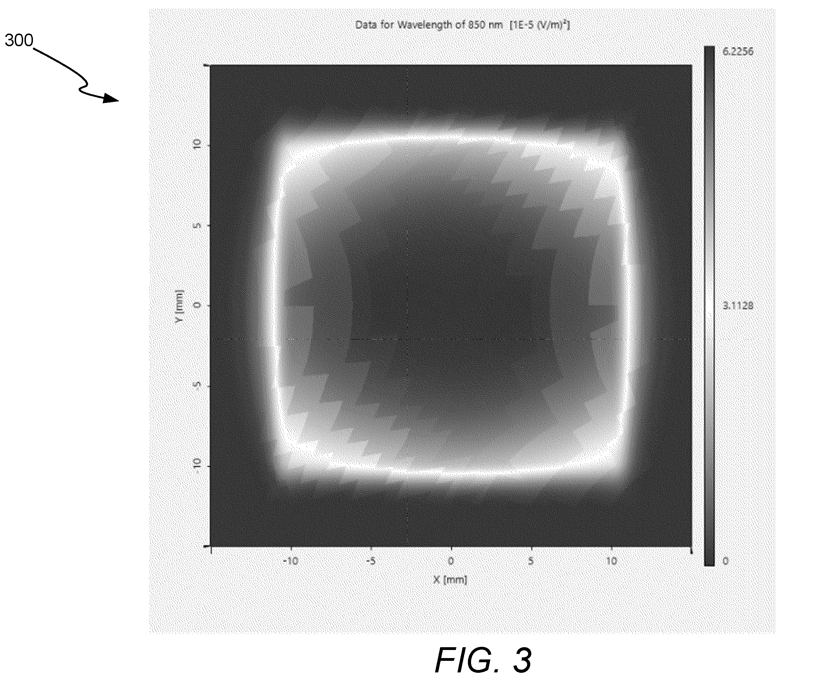

The illumination projector 106 may be implemented to project various partial illumination patterns 202 upon the target object 300. For example, FIG. 2A depicts an example dot illumination pattern 202A, FIG. 2B depicts an example line illumination pattern 202B, and FIG. 2C depicts an example grid illumination pattern 202C that the illumination projector 106 may project upon the target object 300. The partial illumination pattern 202 illuminates a smaller percentage of the target object 300 than the flood illumination pattern 400 of FIG. 3. Due to illuminating a smaller percentage of the target object 300, the partial illumination pattern 202 may provide the sensing system 100 with a lower sensing resolution than what would be provided by the flood illumination pattern 400.

However, also due to illuminating a smaller percentage of the target object 300, the illumination projector 106 may effectively concentrate its optical power on the illuminated portions of the target object 300 thus effectively increasing the illumination range without increasing the overall optical output power. As such, the partial illumination pattern 202 of the illumination projector 106 may provide the sensing system 100 with a greater illumination range and thus a greater sensing range than the flood illumination pattern 400 while remaining within eye safety limits for optical output power.

As shown in FIG. 3, a flood illumination projector may project a flood illumination pattern 400 having a uniform or batwing profile intensity distribution at a specified field of illumination (FOI). As shown in FIG. 2A, the illumination projector 106 may project a dot illumination pattern 202A with a uniform or batwing profile intensity distribution in a specified field of illumination. In particular, the power density of each dot in the dot illumination pattern 202A may be higher than a similar sized portion of the flood illumination pattern 400. However, despite each dot having a greater power density, the total power of the dot illumination pattern 202A may be the same as the total power of the flood illumination because power is focused or concentrated on the dots. Therefore, the dots may be projected a greater distance thus increasing an illumination range of the illumination projector 106 and a sensing range of the sensing system 100 using the illumination projector 106. However, such an illumination projector 106 may provide a lower sensing resolution due to illuminating only portions of the target object 300.

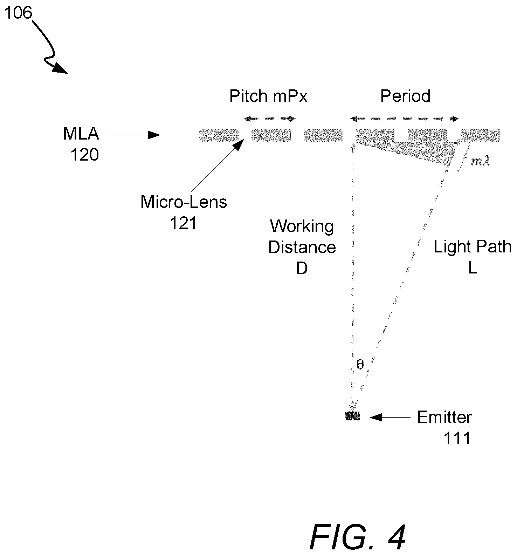

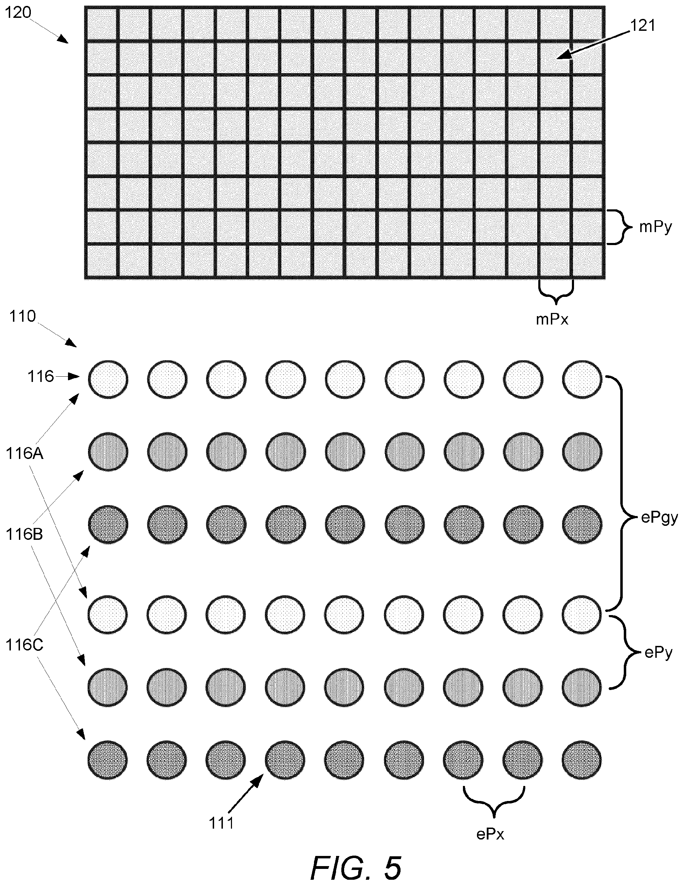

With reference to FIGS. 4 and 5, the illumination projector 106 may comprise an emitter array 110 and a microlens array (MLA) 120. The emitter array 110 and microlens array (MLA) 120 may cooperate to project a partial illumination pattern 202 such as the dot illumination pattern 202A, the line illumination pattern 202B, or the grid illumination pattern 202C. In particular, the dot pitch and dot quantity of the dot illumination pattern 202A may be controlled by the lens pitch (mPx, mPy) between microlenses 121 in the microlens array (MLA) 120 and the emitter pitch (ePx, ePy) between emitters 111 in the emitter array 110. To better appreciate the relationship between lens pitch (mPx, mPy) and emitter pitch (ePx, ePy) and resulting illumination pattern 202, consider a single emitter 111 (e.g., a VCSEL emitter, VECSEL emitter, *etc.)* and associate microlenses 121 as shown in FIG. 4. As shown, if the lens pitch (mPx) of microlens array (MLA) 120 is appropriately specified for the working distance D, the pitch (mPx) will satisfy the coherence period mλ and an interference pattern will be generated due to the light passing through each microlens 121 being coherent. In particular, the dot illumination pattern 202A may be generated from the refraction pattern of a single emitter 111 and the resulting interference pattern of its emitted light through microlenses 121 of the microlens array (MLA) 120.

When the emitter pitch (ePx, ePy) of the emitter array 110 is the same as the lens pitch (mPx, mPy) of the microlens array (MLA) 120 or integer multiples thereof in both the horizontal (x) direction and the vertical (y) direction, the resulting dots of the dot illumination pattern 202A overlap and effectively increase the power density at each respective dot in the dot illumination pattern. If the emitter pitch (ePx, ePy) and the lens pitch (mPx, mPy) are mismatched in the one direction but not the other direction, the resulting dots may not align in the mismatched direction, thus generating illumination patterns such as dashed or solid lines in the mismatched direction. For example, when the lens pitch (mPx, mPy) is 15 µm in both the horizontal and vertical directions, the horizontal emitter pitch (ePx) is 24 µm, and the vertical emitter pitch (ePy) is 15 µm, the illumination projector 106 may generate a dashed or solid horizontal line pattern as depicted by the line illumination pattern 202B of Fig. 2B. In particular, due to the alignment in the vertical direction, each dot pattern of the line illumination pattern 202B overlaps in the vertical direction. However, due to the misalignment in the horizontal direction each dot pattern is spread in the horizontal direction, thus creating the resulting lines of the line illumination pattern 202B.

In a similar manner, the illumination projector 106 may generate the grid illumination patterns 202C of FIG. 2C. In particular, if starting from a configuration that generates the illumination pattern 202B, the emitter array 110 may additionally include emitters 111 at a horizontal emitter pitch ePx that aligns the emitters 111 with the horizontal lens pitch mPx and at a vertical emitter pitch ePx that is mismatched with the vertical lens pitch mPy. By including such additional emitters 111, the illumination projector 106 may generate both horizontal lines and vertical lines to produce the grid illumination pattern 202C of FIG. 2C.

Moreover, the controller 102 may selectively illuminate emitters 111 of the illumination projector 106. In particular, the controller 102 may cycle through different emitter groups 116A, 116B, 116C so as to generate successive partial illumination patterns 202. Such cycling through illumination patterns may increase the effective resolution of the illumination projector 106. For example, the microlens array (MLA) 120 may have a lens pitch (mPx, mPy) of 15 µm in both the horizontal and vertical directions.

The emitter array 110 may have emitter groups 116A, 116B, 116C. The emitters 111 of each respective group 116A, 116B, 116C may align with the microlens array (MLA) 120 in a first direction and misaligned with the microlens array (MLA) 120 in a second direction. For example, as shown in FIG. 5, the emitter array 110 may include three emitter groups 116A, 116B, 116C, wherein each emitter group 116A, 116B, 116C includes multiple rows 116 of emitters 111. Each emitter row 116 may have a horizontal emitter pitch ePx of 24 µm, which may horizontally misalign the emitters 111 of the respective emitter row 116 with the horizontal lens pitch mPx of 15 µm. Moreover, the emitter rows 116 may be arranged with a vertical emitter pitch ePy of 20 µm between adjacent emitter rows 116, which may vertically align the emitters 111 of each emitter row group 116A, 116B, 116B with an integer multiple of the vertical lens pitch mPy of 15 µm. Due to the alignment in the vertical direction and the misalignment in the horizontal direction, each emitter group 116A, 116B, 116C may generate a line illumination pattern similar to the line illumination pattern 202B of Fig. 3.

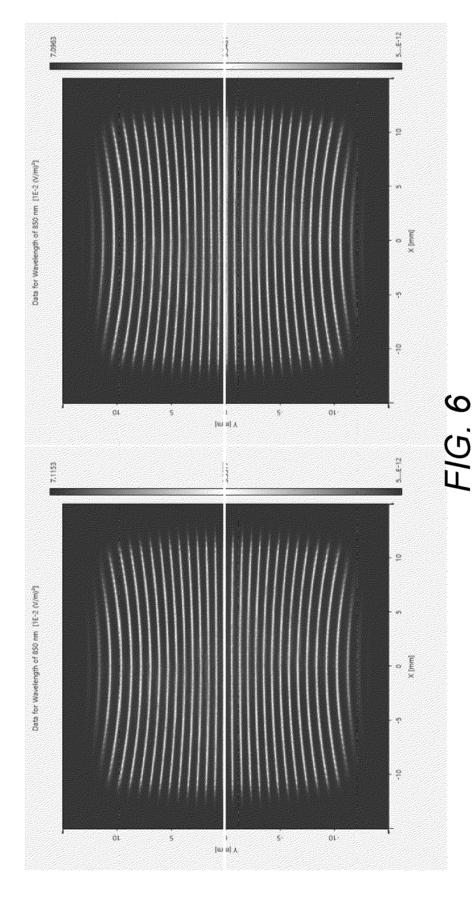

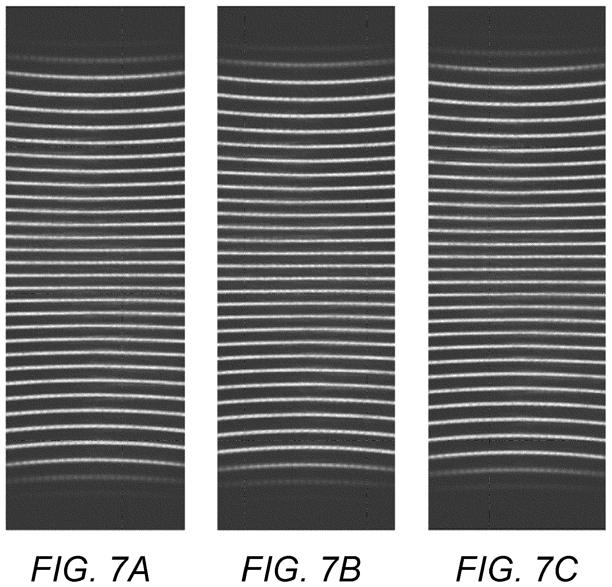

In particular, emitter rows 116 of a first emitter group 116A may be vertically shifted 0 µm, ±60 µm, ±120 µm, and so on. Emitter rows 116 of a second emitter group 116B may be vertically shifted -80 µm, -20 µm, +40 µm, +100 µm and so on. Emitter rows 116 of a third emitter group 116C may be vertically shifted -100 µm, -40 µm, +20 µm, +80 µm and so on. Because the second and third groups are shifted with respect to the microlens 120 by about -5 µm and +5 µm (i.e., a third of the microlens vertical pitch ePy) respectively, the generated illumination lines will shift by about a third (1/3) of the line pitch, as shown in Figs. 6 and 7A-7C. In particular, FIG. 7A depicts the line illumination pattern produced by the first emitter group 116A, FIG. 7B depicts the line illumination pattern produced by the second emitter group 116B, which is shifted by about a third (1/3) of line pitch of the line illumination pattern of FIG. 7A, and FIG.7C depicts the line illumination pattern produced by the third emitter group 116C, which is shifted by about a third (1/3) of the line pitch of the line illumination pattern of FIG. 7B. Thus, the controller 102 may switch illumination among the three emitter groups 116A, 116B, 116C to successively generate line illumination patterns that illuminate different portions of the target object 300, and the controller 102 of the sensing system 100 may effectively stitch the illumination from the three emitter groups 116A, 116B, 116C together to increase its effective resolution.

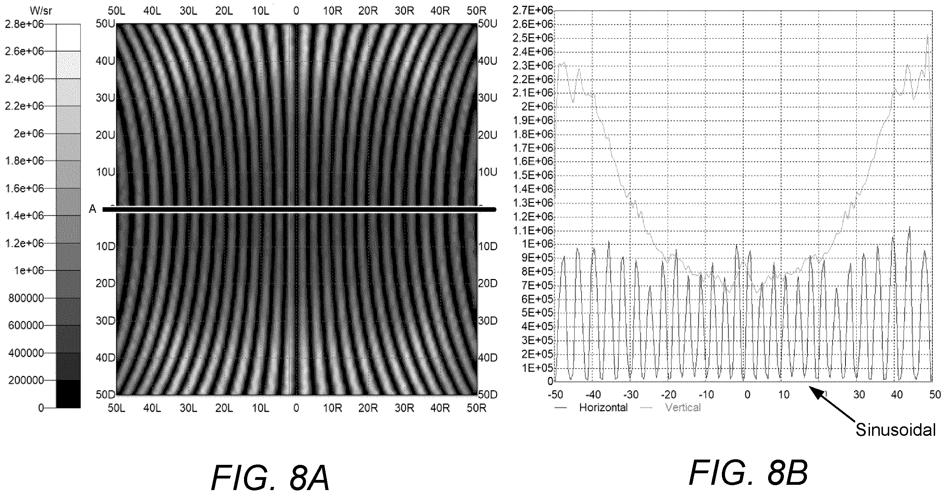

The illumination projector 106 and its partial illumination patterns may provide various advantages over conventional illumination projectors that project a flood illumination pattern. In particular, the illumination projector 106 may generate a near sinusoidal line illumination pattern for structure light sensing. See, e.g., illumination pattern of FIG. 8A and the graph of FIG. 8, which depicts a near sinusoidal intensity level of the illumination pattern of FIG. 8A taken along a horizontal cross-section A. The controller 102 of the illumination projector 106 may increase resolution through stitching different illumination patterns together. Moreover, the stitching concept may be extended beyond the example depicted in FIGS. 5-7C. In particular, the emitter array 110 may include groups of emitter columns in addition to the emitter groups 116A, 116B, 116C of emitter rows 116. The controller 102 may cycle through these row emitter groups and column emitter groups so as to create grid illumination patterns similar to the grid illumination pattern 202C that shift in a manner similar to the line illumination patterns of FIGS. 7A-7C.

In various embodiments, the pitch between emitter groups 116A, 116B, 116C may be a uniform 1/n of the lens pitch mPy so as to evenly fill fractional space between microlenses 121. However, the emitter pitch ePy between adjacent emitter rows 116 of different emitter groups 116A, 116B, 116C may be any full multiple of the lens pitch mPy plus a differential pitch ePf.

For example, FIG. 5 depicts three emitter groups 116A, 116B, 116C (e.g., n = 3) and a vertical lens pitch mPy of 15 µm. The vertical emitter pitch ePy between each emitter row 116 of the first emitter group 116A and an emitter row 116 of the second emitter group 116B that is directly below it may be 5 µm, 20 µm, 35 µm, etc.. Similarly, the vertical emitter pitch ePy between each emitter row 116 of the first emitter group 116A and an emitter row 116 of the third emitter group 116C that is directly above it may be 5 µm, 20 µm, 35 µm, etc. Thus, the vertical emitter pitch ePy may be represented mathematical as ePy = mPy × (K + 1/n), where K is zero or any positive integer.

Furthermore, emitter rows 116 in a same emitter group 116A, 116B, or 116C may have a vertical emitter group pitch ePgy that is a multiple of the lens pitch mPy so that the optical outputs of the emitter rows 116 in the same emitter group 116A, 116B, or 116C overlap in the far field. Such a vertical emitter group pitch ePgy may be mathematically represented as ePgy = mPy × N, where N is any positive integer. For the example in FIG. 5, if the microlens array (MLA) 120 has a vertical lens pitch mPy of 15 µm, it may be very difficult or impractical to implement a vertical emitter pitch ePy of 15 µm (*i.e.,* N equal 1) due to current VCSEL fabrication technologies. Thus, a greater vertical emitter pitch ePy (*i.e.,* N greater than or equal to 2) may be used to accommodate the physical constraints of current fabrication technologies.

For generation of a line illumination pattern from emitters 111 within the same emitter group 116A, 116B, or 116C, the pitch between emitters 111 may be designed to fill the fractional space between microlenses 121 as fully as possible with the available emitters 111. For example, the horizontal emitter pitch ePx may be mathematically represented as ePx = ePf + Q × mPx / M, where Q may be any odd integer and ePf is any fixed spacing, typically on the order of 30 µm. However, any emitter spacing that provides a sufficient quantity of distinct differences between emitter centers to microlens centers generally obtains suitable results. Meaning that for M emitters 111 with a uniform horizontal spacing ePx, the remainder values may be represented as Rv = Mod(I × ePx, mPx) for I = 0, 1, 2, 3, ... M-1, where Mod is the modulus function which provides the remainder of I × ePx divided by mPx. Thus, any emitter spacing that provides a sufficient number of distinct remainder values Rv between 0 and mPx may be used. Typically seven (7) or more distinct values are preferred and ideally the horizontal emitter pitch ePx would provide M distinct remainder values Rv between 0 and mPx.

In some embodiments, the illumination projector 106 may use a non-uniform spacing between emitters 111, meaning the horizontal emitter pitch ePx may be randomized and varied between emitters 111. In such embodiments, the horizontal emitter pitch may be denoted as ePxj where j = 0, 1, 2, 3, ... M-1. The remainder values Rv may be represented mathematically as Mod(Sum(ePxj), mPx) for j = 0 to k, where k = 1, 2, 3, ... M-1. Again, the illumination projector 106 may obtain suitable illumination results if the non-uniform spacing provides a sufficient number of distinct remainder values Rv between 0 and mPx. For such non-uniform pitch embodiments, the distribution of the remainder values Rv also should be roughly uniform across a span of 0 to mPx.

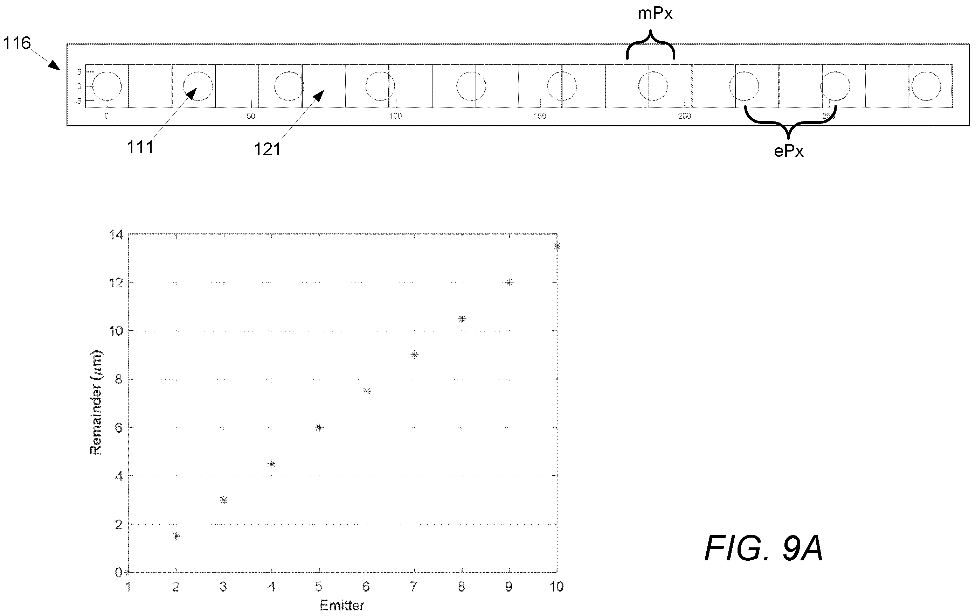

FIGS. 9A-9C further illustrate the above discussed spatial relationship between available emitters 111 and microlenses 121. In particular, FIG. 9A depicts an example in which emitters 111 have a uniform horizontal emitter pitch ePx and the microlenses 121 have a uniform horizontal lens pitch ePx. More specifically, FIG. 9A depicts an example in which Q = 1, the differential offset ePf is 30 µm, and the microlens horizontal pitch mPx is 15 µm. Per ePx = ePf + Q × mPx / M, the uniform horizontal emitter pitch ePx is 31.5 µm. Further, as shown in the depicted graph of remainder values Rv, the uniform horizontal emitter pitch ePx of 31.5 µm and uniform horizontal lens pitch mPx of 15 µm may result in ten (10) distinct remainder values Rv, which are uniformly distributed between 0 and the horizontal lens pitch mPx value of 15 µm. As such, the example of FIG. 9A should result in a well-formed partial illumination pattern.

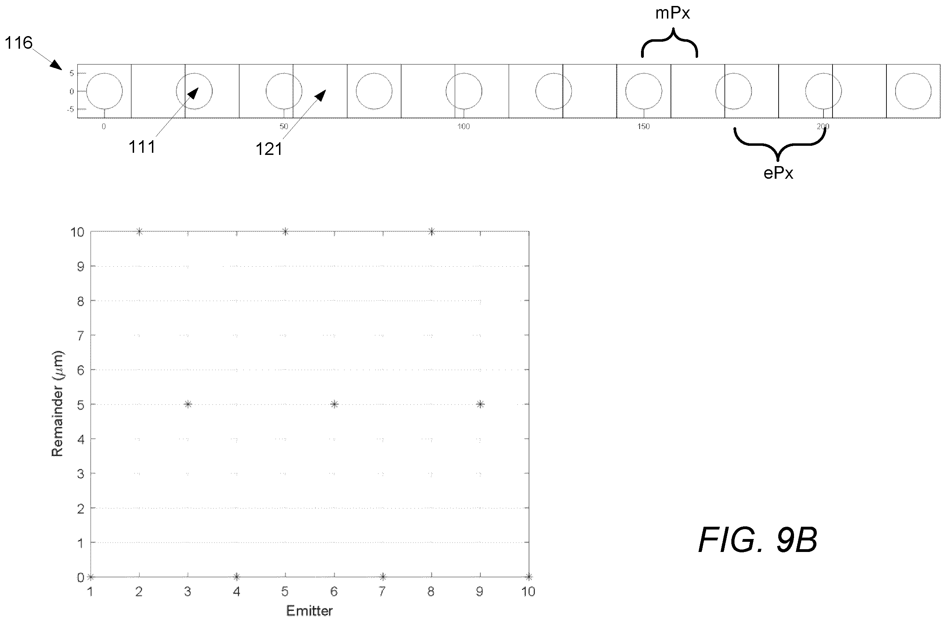

FIG. 9B depicts another example in which emitters 111 have a uniform horizontal pitch ePx and corresponding microlenses 121 have a uniform horizontal lens pitch mPx. More specifically, FIG. 9B depicts an example in which Q = 1, the differential offset ePf is 25 µm, and the microlens horizontal pitch mPx is 15 µm. Per ePx = ePf + Q × mPx / M, the uniform horizontal emitter pitch ePx is 26.67 µm. Further, as shown in the depicted graph of remainder values Rv, the uniform horizontal emitter pitch ePx of 26.67 µm and uniform horizontal lens pitch mPx of 15 µm result in only three (3) distinct remainder values Rv distributed between 0 and the horizontal lens pitch mPx value of 15 µm. As such, the example of FIG. 9B should result in a partial illumination pattern that is not as well-formed as the illumination pattern of the example of FIG. 9A.

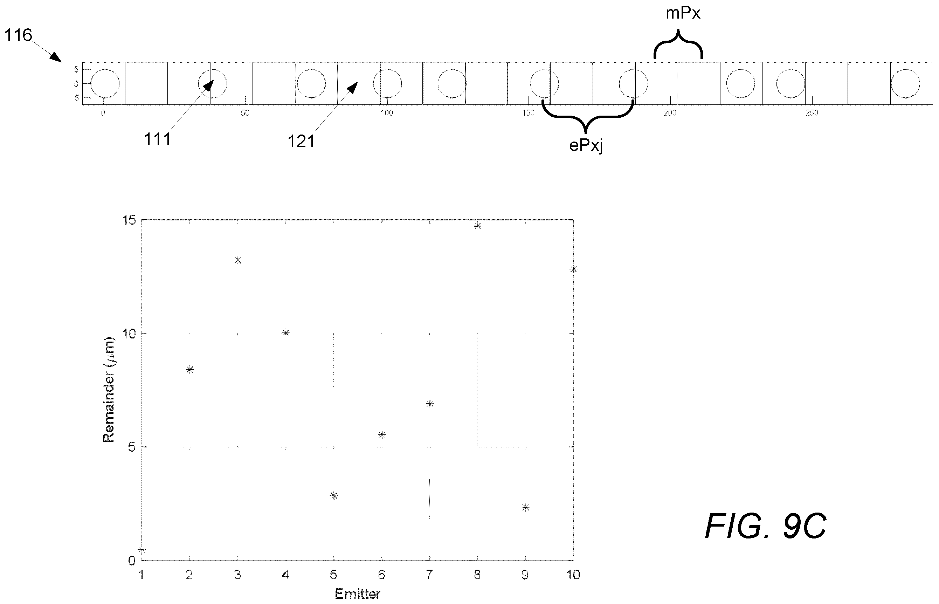

FIG. 9C depicts yet another example in which emitters 111 have a randomized, non-uniform horizontal emitter pitch ePx and corresponding microlenses 121 have a uniform horizontal lens pitch mPx. More specifically, FIG. 9C depicts an example in which Q = 1, the horizontal emitter spacing ePx between each emitter in the row 116 differs and the microlens horizontal pitch mPx is 15 µm. Further, as shown in the depicted graph of remainder values Rv, the non-uniform horizontal emitter pitch ePx and uniform horizontal lens pitch mPx of 15 µm may still result in ten (10) distinct remainder values Rv generally well distributed between 0 and the horizontal lens pitch mPx value of 15 µm. As such, the example of FIG. 9C may provide a partial illumination pattern that is on par with the illumination pattern of the example of FIG. 9A.

The present disclosure includes reference to certain examples, however, it will be understood by those skilled in the art that various changes may be made and equivalents may be substituted without departing from the scope of the disclosure. In addition, modifications may be made to the disclosed examples without departing from the scope of the present disclosure. Therefore, it is intended that the present disclosure not be limited to the examples disclosed, but that the disclosure will include all examples falling within the scope of the appended claims.

Implementations described herein may relate to the following: A sensing system may include an illumination projector, an image sensor, and one or more controllers. The illumination projector may project a partial illumination pattern on a target object. The image sensor may sense the partial illumination pattern projected on the target object and may generate signals representative of the sensed illumination pattern. The one or more controllers may control the illumination projector and process the signals generated by the image sensor. The illumination projector may include a microlens array and an emitter array. A spatial relationship of emitters of the emitter array to microlenses of the microlens array may cause the emitter array and the microlens array to project light upon the target object in the partial illumination pattern.

The present application claims priority of US patent application 63/710,173, filed October 22, 2024, and US patent application 19/084,878, filed March 20, 2025. The entire disclosure content of these applications is incorporated herein for all purposes.

In the following, a set of items is disclosed. The items are numbered to facilitate referencing the features of one item in other items. The items form part of the present disclosure and could be made subject to independent and/or dependent claims irrespective of what currently is claimed in the application. We note, however, that the scope of protection is defined by the appended claims, where the following items do not constitute claims. The items are:
1. An illumination projector, comprising:
   a microlens array comprising microlenses arranged per a lens pitch between the microlenses of the microlens array;
   an emitter array comprising emitters arranged per an emitter pitch between the emitters of the emitter array;
   wherein the emitters of the emitter array emit light through the microlenses of the microlens array; and
   wherein a spatial relationship of the emitter pitch to the lens pitch causes the emitter array and microlens array to project light upon a target object in a partial illumination pattern.
2. The illumination projector of item 1, wherein the partial illumination pattern comprises a dot illumination pattern.
3. The illumination projector of item 1, wherein the partial illumination pattern comprises a line illumination pattern.
4. The illumination projector of item 1, wherein the partial illumination pattern comprises a grid illumination pattern.
5. The illumination projector of item 1, wherein:
   the emitters of the emitter array are arranged in emitter rows;
   each emitter row has a uniform horizontal emitter pitch between its respective first emitters; and
   the emitter rows are arranged with a uniform vertical pitch between adjacent first emitter rows.
6. The illumination projector of item 1, wherein:
   the emitters of the emitter array are arranged in emitter rows;
   each emitter row has a non-uniform horizontal emitter pitch between its respective first emitters; and
   the emitter rows are arranged with a uniform vertical pitch between adjacent first emitter rows.
7. The illumination projector of item 1, comprising one or more controllers, wherein:
   the emitter array comprises a first emitter group and a second emitter group;
   the one or more controllers are configured to switch between illumination via the first emitter group and illumination via the second emitter group;
   a first spatial relationship of the first emitter group to the microlens array causes the first emitter group and the microlens array to project light upon the target object in a first partial illumination pattern; and
   a second spatial relationship of the second emitter group to the microlens array causes the second emitter group and the microlens array to project light upon the target object in a second partial illumination pattern that is spatially shifted with respect to the first partial illumination pattern.
8. The illumination projector of item 7, wherein the second partial illumination pattern illuminates portions of the target object not illuminated by the first partial illumination pattern.
9. The illumination projector of item 7, wherein:
   first emitters of the first emitter group are arranged in first emitter rows;
   each first emitter row has a uniform horizontal emitter pitch between its respective first emitters; and
   the first emitter rows are arranged with a uniform vertical pitch between adjacent first emitter rows.
10. The illumination projector of item 9, wherein:
   second emitters of the second emitter group are arranged in second emitter rows;
   each second emitter row has the uniform horizontal emitter pitch between its respective second emitters; and
   the second emitter rows are arranged with the uniform vertical pitch between adjacent second emitter rows.
11. A sensing system, comprising:
   an illumination projector configured to project a partial illumination pattern on a target object;
   an image sensor configured to sense the partial illumination pattern projected on the target object and generate signals representative of the sensed illumination pattern; and
   one or more controllers configured to control the illumination projector and process the signals generated by the image sensor;
   wherein the illumination projector comprises a microlens array and an emitter array; and
   wherein a spatial relationship of emitters of the emitter array to microlenses of the microlens array causes the emitter array and the microlens array to project light upon the target object in the partial illumination pattern.
12. The sensing system of item 11, wherein the partial illumination pattern comprises a dot illumination pattern.
13. The sensing system of item 11, wherein the partial illumination pattern comprises a line illumination pattern.
14. The sensing system of item 11, wherein the partial illumination pattern comprises a grid illumination pattern.
15. The sensing system of item 11, wherein:
   emitters of the emitter array are arranged in emitter rows;
   each emitter row has a uniform horizontal emitter pitch between its respective first emitters; and
   the emitter rows are arranged with a uniform vertical pitch between adjacent first emitter rows.
16. The sensing system of item 11, wherein:
   emitters of the emitter array are arranged in emitter rows;
   each emitter row has a non-uniform horizontal emitter pitch between its respective first emitters; and
   the emitter rows are arranged with a uniform vertical pitch between adjacent first emitter rows.
17. The sensing system of item 11, wherein:
   the emitter array comprises a first emitter group and a second emitter group;
   the one or more controllers are configured to switch between illumination via the first emitter group and illumination via the second emitter group;
   a first spatial relationship of the first emitter group to the microlens array causes the first emitter group and the microlens array to project light upon the target object in a first partial illumination pattern; and
   a second spatial relationship of the second emitter group to the microlens array causes the second emitter group and the microlens array to project light upon the target object in a second partial illumination pattern that is spatially shifted with respect to the first partial illumination pattern.
18. The sensing system of item 17, wherein:
   first emitters of the first emitter group are arranged in first emitter rows;
   each first emitter row has a uniform horizontal emitter pitch between its respective first emitters;
   the first emitter rows are arranged with a uniform vertical pitch between adjacent first emitter rows;
   second emitters of the second emitter group are arranged in second emitter rows;
   each second emitter row has the uniform horizontal emitter pitch between its respective second emitters; and
   the second emitter rows are arranged with the uniform vertical pitch between adjacent second emitter rows.
19. The sensing system of item 11, wherein the one or more controllers determine distance of the target object from the image sensor based on deformation of the partial illumination pattern.
20. The sensing system of item 11, wherein the one or more controllers determine distance of the target object from the image sensor based on a timing difference between pulses of light exiting the illumination projector and receipt of such pulses by the image sensor.

## Claims

1. An illumination projector, comprising:
a microlens array comprising microlenses arranged per a lens pitch between the microlenses of the microlens array;
an emitter array comprising emitters arranged per an emitter pitch between the emitters of the emitter array;
wherein the emitters of the emitter array emit light through the microlenses of the microlens array; and
wherein a spatial relationship of the emitter pitch to the lens pitch causes the emitter array and microlens array to project light upon a target object in a partial illumination pattern.

2. The illumination projector of claim 1, wherein
a) the partial illumination pattern comprises a dot illumination pattern, and/or
b) the partial illumination pattern comprises a line illumination pattern, and/or
c) the partial illumination pattern comprises a grid illumination pattern.

3. The illumination projector of any one of the preceding claims, wherein:
the emitters of the emitter array are arranged in emitter rows;
each emitter row has a uniform horizontal emitter pitch between its respective first emitters; and
the emitter rows are arranged with a uniform vertical pitch between adjacent first emitter rows.

4. The illumination projector of claim 1 or 2, wherein:
the emitters of the emitter array are arranged in emitter rows;
each emitter row has a non-uniform horizontal emitter pitch between its respective first emitters; and
the emitter rows are arranged with a uniform vertical pitch between adjacent first emitter rows.

5. The illumination projector of any one of the preceding claims, comprising one or more controllers, wherein:
the emitter array comprises a first emitter group and a second emitter group;
the one or more controllers are configured to switch between illumination via the first emitter group and illumination via the second emitter group;
a first spatial relationship of the first emitter group to the microlens array causes the first emitter group and the microlens array to project light upon the target object in a first partial illumination pattern; and
a second spatial relationship of the second emitter group to the microlens array causes the second emitter group and the microlens array to project light upon the target object in a second partial illumination pattern that is spatially shifted with respect to the first partial illumination pattern, and wherein, optionally, the second partial illumination pattern illuminates portions of the target object not illuminated by the first partial illumination pattern.

6. The illumination projector of claim 5, wherein:
first emitters of the first emitter group are arranged in first emitter rows;
each first emitter row has a uniform horizontal emitter pitch between its respective first emitters; and
the first emitter rows are arranged with a uniform vertical pitch between adjacent first emitter rows.

7. The illumination projector of claim 6, wherein:
second emitters of the second emitter group are arranged in second emitter rows;
each second emitter row has the uniform horizontal emitter pitch between its respective second emitters; and
the second emitter rows are arranged with the uniform vertical pitch between adjacent second emitter rows.

8. A sensing system, comprising:
an illumination projector configured to project a partial illumination pattern on a target object;
an image sensor configured to sense the partial illumination pattern projected on the target object and generate signals representative of the sensed illumination pattern; and
one or more controllers configured to control the illumination projector and process the signals generated by the image sensor;
wherein the illumination projector comprises a microlens array and an emitter array; and
wherein a spatial relationship of emitters of the emitter array to microlenses of the microlens array causes the emitter array and the microlens array to project light upon the target object in the partial illumination pattern.

9. The sensing system of claim 8, wherein the partial illumination pattern comprises a dot illumination pattern.

10. The sensing system of claim 8 or 9, wherein the partial illumination pattern comprises a line illumination pattern.

11. The sensing system of any one of claims 8 to 10, wherein the partial illumination pattern comprises a grid illumination pattern.

12. The sensing system of any one of claims 8 to 11, wherein:
a) emitters of the emitter array are arranged in emitter rows;
each emitter row has a uniform horizontal emitter pitch between its respective first emitters; and
the emitter rows are arranged with a uniform vertical pitch between adjacent first emitter rows, or
b) emitters of the emitter array are arranged in emitter rows;
each emitter row has a non-uniform horizontal emitter pitch between its respective first emitters; and
the emitter rows are arranged with a uniform vertical pitch between adjacent first emitter rows.

13. The sensing system of any one of claims 8 to 12, wherein:
the emitter array comprises a first emitter group and a second emitter group;
the one or more controllers are configured to switch between illumination via the first emitter group and illumination via the second emitter group;
a first spatial relationship of the first emitter group to the microlens array causes the first emitter group and the microlens array to project light upon the target object in a first partial illumination pattern; and
a second spatial relationship of the second emitter group to the microlens array causes the second emitter group and the microlens array to project light upon the target object in a second partial illumination pattern that is spatially shifted with respect to the first partial illumination pattern, and wherein, optionally:
first emitters of the first emitter group are arranged in first emitter rows;
each first emitter row has a uniform horizontal emitter pitch between its respective first emitters;
the first emitter rows are arranged with a uniform vertical pitch between adjacent first emitter rows;
second emitters of the second emitter group are arranged in second emitter rows;
each second emitter row has the uniform horizontal emitter pitch between its respective second emitters; and
the second emitter rows are arranged with the uniform vertical pitch between adjacent second emitter rows.

14. The sensing system of any one of claims 8 to 13, wherein the one or more controllers determine distance of the target object from the image sensor based on deformation of the partial illumination pattern.

15. The sensing system of any one of claims 8 to 14, wherein the one or more controllers determine distance of the target object from the image sensor based on a timing difference between pulses of light exiting the illumination projector and receipt of such pulses by the image sensor.
